# EUROPEAN PATENT APPLICATION

(11) **EP 3 050 703 A1**
(43) Date of publication of application: **03.08.2016**
(21) Application number: 16152161.2
(22) Date of filing: 21.01.2016
(51) Int. Cl.: B32B 38/00, B32B 37/00, H01M 8/1004

(54) **DRYING APPARATUS AND DRYING METHOD**

(30) Priority: 27.01.2015 JP 2015012958
(71) Applicant: SCREEN Holdings Co., Ltd., Kyoto 602-8585 (JP)
(72) Inventor: Nomoto, Masaki, Kyoto-shi, Kyoto 602-8585 (JP); Omori, Masafumi, Kyoto-shi, Kyoto 602-8585 (JP)
(74) Representative: Kilian Kilian & Partner

(57) **Abstract**

An electrolyte membrane (2) coated with catalyst ink is sucked and transported by a suction roller (20). A drying furnace (40) is moved between a processing position where the drying furnace (40) covers a part of the outer circumferential surface of the suction roller (20) and a standby position where the drying furnace is isolated from the suction roller. The drying furnace (40) in the processing position dries the catalyst ink applied to the electrolyte membrane (2) transported by the suction roller by blowing hot air on the catalyst ink. If transport of the electrolyte membrane (2) is stopped for some reason, the drying furnace (40) is moved from the processing position to the standby position and continues operation under a processing condition same as that for heating process on the catalyst ink in the processing position. Thus, temperature control of the drying furnace (40) can be continued without causing nonuniformity of the temperature distribution of the suction roller (20).

## Description

### BACKGROUND OF THE INVENTION

### Field of the Invention

The present invention relates a drying apparatus and a drying method to dry a coating liquid applied to a band-shaped base material such as an electrolyte membrane of a fuel cell by heating the coating liquid.

### Description of the Background Art

A fuel cell has received attention in recent years as a power source for driving automobiles, household units and mobile phones, for example. The fuel cell is a power generating system of generating power using electrochemical reaction between hydrogen (H₂) contained in a fuel and oxygen (O₂) in air. The fuel cell has an advantage in terms of high power generation efficiency and low environmental burden.

The fuel cell is categorized into some types that are determined depending on an electrolyte to be used. One of the types is a polymer electrolyte fuel cell (PEFC) using a polymer electrolyte membrane (hereinafter also called an "electrolyte membrane" simply) as an electrolyte membrane. The polymer electrolyte fuel cell can be operated in ordinary temperatures and can be reduced in size and weight, so that it has been expected to be used in automobiles and mobile phones.

The polymer electrolyte fuel cell is generally formed by stacking a plurality of cells. One cell (unit cell) is formed of a membrane-electrode-assembly (MEA) and a pair of separators arranged on opposite sides of the MEA in a manner such that the MEA is caught between the separator. The MEA includes a catalyst-coated membrane (CCM) and gas diffusion layers arranged on opposite sides of the catalyst-coated membrane. The catalyst-coated membrane includes a polymer electrolyte membrane and catalyst layers formed on opposite surfaces of the polymer electrolyte membrane. Electrode layers in a pair are formed on the opposite sides of the polymer electrolyte membrane. One of the electrode layers is formed of the catalyst layer and the gas diffusion layer on one of the opposite sides of the polymer electrolyte membrane and the other of the electrode layers is formed of the catalyst layer and the gas diffusion layer on the other of these opposite sides. One of the electrode layers is an anode electrode and the other of the electrode layers is a cathode electrode. As fuel gas containing hydrogen contacts the anode electrode and as air contacts the cathode electrode, electrochemical reaction is produced to generate power.

The aforementioned catalyst-coated membrane is typically formed by coating a surface of the electrolyte membrane with catalyst ink (electrode paste) prepared by dispersing catalyst particles containing platinum (Pt) in a solvent such as alcohol and drying the catalyst ink. The electrolyte membrane has a feature in that it absorbs the solvent in the catalyst ink or moisture in an atmosphere easily, so that it is likely to swell and shrink. This causes a problem of creases or pinholes in the electrolyte membrane that are to occur when the catalyst ink is applied and dried. The occurrence of creases or pinholes in the electrolyte membrane reduces the power generation performance of the fuel cell.

A technique disclosed in EP2813363A1 is intended to solve the aforementioned problem. According to this technique, while an electrolyte membrane is transported and supported under suction by a suction roller, catalyst ink is applied to one surface of the electrolyte membrane and dried immediately thereafter by blowing hot air, thereby forming a catalyst layer. According to the technique disclosed in EP2813363A1, the catalyst ink is applied and then dried while the electrolyte membrane likely to swell and shrink remains supported under suction by the suction roller. This can prevent the occurrence of creases or pinholes in the electrolyte membrane.

In the apparatus disclosed in EP2813363A1, in order to dry the catalyst ink while the electrolyte membrane remains supported under suction by the suction roller, a drying furnace is provided so as to cover a part of the suction roller. In this structure, however, the following problem arises if transport of the electrolyte membrane is stopped for some reason.

The drying furnace requires some time from start of temperature control to temperature stabilization. Thus, it is preferable that the temperature of the drying furnace be controlled all the time. However, if only the temperature control of the drying furnace continues while transport of the electrolyte membrane is stopped, only the temperature of a part of the suction roller and only the temperature of a part of the electrolyte membrane heated directly by the drying furnace are increased significantly. Meanwhile, the apparatus disclosed in EP2813363A1 includes a cooling mechanism of cooling the suction roller by blowing cooling air. If the suction roller is stopped, the cooling air is blown on only a part of the suction roller to cool this part excessively. This results in serious nonuniformity of the temperature distribution of the suction roller. Thus, when transport of the electrolyte membrane is restarted, a substantial amount of time is required until the temperature of the suction roller is stabilized while the temperature of the drying furnace is stabilized. This causes a problem in that a long time is eventually required until process is restarted.

The aforementioned problem relating to nonuniformity of the temperature distribution of the suction roller does not occur if the temperature control of the drying furnace is stopped when transport of the electrolyte membrane is stopped. However, if the temperature control of the drying furnace is stopped, restarting the process requires restarting the temperature control of the drying furnace. In this case, a substantial amount of time is required for temperature stabilization. Like in the aforementioned case, in a period from restart of the temperature control of the drying furnace to temperature stabilization, only the temperature of a part of the suction roller and only the temperature of a part of the electrolyte membrane are heated to also cause the problem of nonuniformity of the temperature distribution of the suction roller. The nonuniformity of the temperature distribution of the suction roller may be prevented by restarting rotation of the suction roller coincidentally with restart of the temperature control of the drying furnace. In this case, however, the electrolyte membrane is wasted in large amounts to no purpose by rotation of the suction roller until the temperature of the drying furnace is stabilized.

The provision of the drying furnace in a manner such that the drying furnace covers a part of the suction roller further causes a problem in that the suction roller cannot be cleaned easily during maintenance.

### SUMMARY OF THE INVENTION

The present invention is intended for a drying apparatus to dry a coating liquid applied to a band-shaped base material by heating the coating liquid.

According to one aspect of this invention, the drying apparatus includes: a suction roller having an outer circumferential surface on which the base material is supported under suction, the base material being coated with the coating liquid applied to one surface of the base material; a heating part that dries the coating liquid by heating the coating liquid, the coating liquid being applied to the one surface of the base material supported under suction and transported by the suction roller; and a driving part that moves the heating part between a processing position where the heating part covers a part of the outer circumferential surface of the suction roller and a standby position where the heating part is isolated from the suction roller. After the heating part is moved to the standby position, the heating part continues operation under a processing condition same as that for heating process in the processing position.

After the heating part is moved to the standby position, the heating part continues operation under a processing condition same as that for heating process in the processing position. Thus, even if transport of the base material is stopped and the heating part is moved to the standby position, temperature control of the heating part can be continued without causing nonuniformity of the temperature distribution of the suction roller.

Preferably, the heating part is a hot-air drying furnace that ejects hot air and the drying apparatus includes an exhaust part provided in the standby position. The exhaust part is used for exhaust of hot air ejected from the hot-air drying furnace.

Temperature control of the heating part can be continued in the standby position in the same environment as temperature control in the processing position.

Preferably, the drying apparatus further includes a shielding mechanism that separates atmosphere in the standby position and atmosphere in the processing position.

Heat of the heating part continuing temperature control in the standby position can be prevented from becoming influential on the suction roller.

The present invention is also intended for a drying method to dry a coating liquid applied to a band-shaped base material by heating the coating liquid.

According to one aspect of this invention, the drying method includes the steps of: (a) supporting the band-shaped base material under suction on an outer circumferential surface of a suction roller; (b) applying the coating liquid to one surface of the base material supported under suction and transported by the suction roller; and (c) drying the coating liquid applied to the one surface of the base material by heating the coating liquid using a heating part. The heating part is moved between a processing position where the heating part covers a part of the outer circumferential surface of the suction roller and a standby position where the heating part is isolated from the suction roller. After the heating part is moved to the standby position, the heating part continues operation under a processing condition same as that for heating process in the processing position.

After the heating part is moved to the standby position, the heating part continues operation under a processing condition same as that for heating process in the processing position. Thus, even if transport of the base material is stopped and the heating part is moved to the standby position, temperature control of the heating part can be continued without causing nonuniformity of the temperature distribution of the suction roller.

It is therefore an object of the present invention to continue temperature control of the heating part without causing nonuniformity of the temperature distribution of the suction roller even if transport of the base material is stopped.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a side view showing an entire structure of a manufacturing apparatus 1 for a catalyst-coated membrane to which a drying apparatus according to the present invention is incorporated;
Fig. 2 is a perspective view showing a suction roller and a drying furnace;
Fig. 3 shows the structure of the suction roller and that of the drying furnace;
Fig. 4 is a front view showing the suction roller and the drying furnace while the drying furnace is placed in a processing position;
Fig. 5 is a front view showing the suction roller and the drying furnace while the drying furnace is placed in a standby position;
Fig. 6 is a flowchart showing a procedure of manufacturing the catalyst-coated membrane using the manufacturing apparatus of Fig. 1;
Fig. 7 is a sectional view of an electrolyte membrane at a time when the electrolyte membrane is wound off an electrolyte membrane unwinding roller;
Fig. 8 shows a catalyst layer formed on the front surface of the electrolyte membrane;
Fig. 9 shows how a backsheet is separated and the electrolyte membrane is sucked on the suction roller by a separation roller;
Fig. 10 shows the electrolyte membrane and catalyst ink applied intermittently to the electrolyte membrane;
Fig. 11 is a sectional view of the electrolyte membrane coated with the catalyst ink applied intermittently;
Fig. 12 is a sectional view of the electrolyte membrane with a catalyst layer formed on each of the front surface and the rear surface of the electrolyte membrane;
Fig. 13 shows laminating process of laminating a support film on a coated surface of the electrolyte membrane;
Fig. 14 is a sectional view of the electrolyte membrane on which the support film is laminated; and
Figs. 15 and 16 each show a different example of a relationship between the processing position and the standby position.

### DESCRIPTION OF THE PREFERRED EMBODIMENTS

A preferred embodiment of the present invention is described below in detail by referring to the drawings.

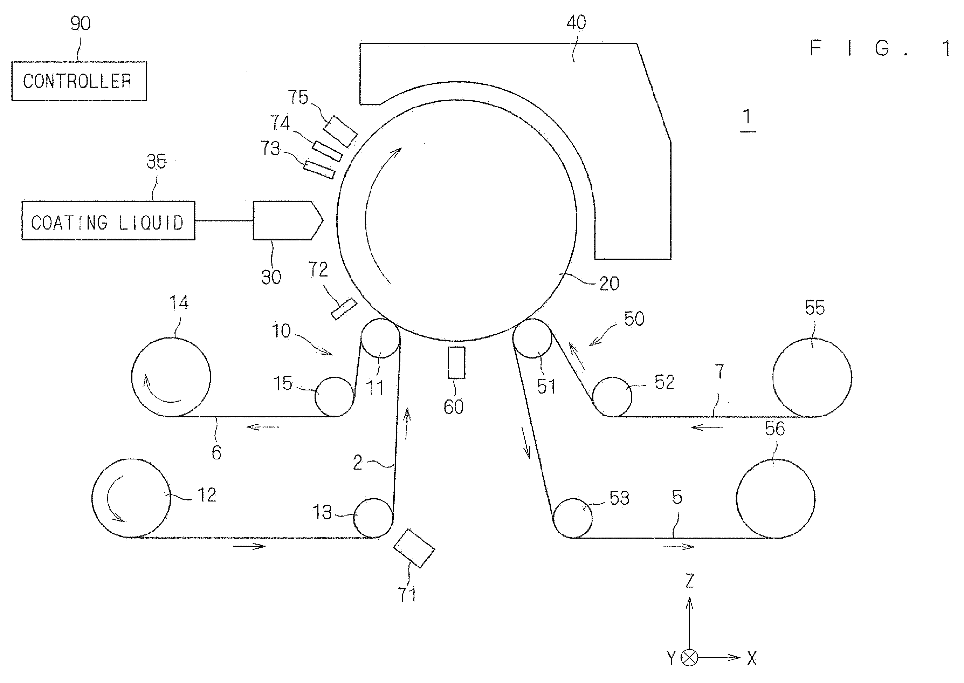

Fig. 1 is a side view showing an entire structure of a manufacturing apparatus 1 for a catalyst-coated membrane to which a drying apparatus according to the present invention is incorporated. The manufacturing apparatus 1 for a catalyst-coated membrane is to manufacture a catalyst-coated membrane for a polymer electrolyte fuel cell by applying catalyst ink (electrode paste) to an electrolyte membrane 2 as a band-shaped thin film, drying the applied catalyst ink, and forming a catalyst layer on the electrolyte membrane 2. Fig. 1 and its subsequent drawings are given an XYZ orthogonal coordinate system, where appropriate, to clearly show the directions of these drawings relative to each other. This XYZ orthogonal coordinate system defines a Z-axis direction as a vertical direction and an XY plane as a horizontal plane. To facilitate understanding, in Fig. 1 and each of its subsequent drawings, the dimension of each part and the number of parts are exaggerated or simplified.

Main components of the manufacturing apparatus 1 include: a separation part 10 that separates a backsheet 6 from the electrolyte membrane 2; a suction roller 20 transports and supports the electrolyte membrane 2 under suction; a coating nozzle 30 from which catalyst ink is applied to a surface of the electrolyte membrane 2; a drying furnace (heating part) 40 that dries the applied catalyst ink by heating the catalyst ink; and an attachment part 50 that laminates a support film on the electrolyte membrane 2 after being dried. The manufacturing apparatus 1 further includes a controller 90 for management of the entire apparatus.

The separation part 10 includes a separation roller 11. The manufacturing apparatus 1 further includes an electrolyte membrane unwinding roller 12, a backsheet winding roller 14, and a tension sensing roller 13 and a tension sensing roller 15. The electrolyte membrane unwinding roller 12 is rotated continuously by a motor not shown in the drawings. The electrolyte membrane 2 with the backsheet 6 is wound around the electrolyte membrane unwinding roller 12. The electrolyte membrane unwinding roller 12 feeds the electrolyte membrane 2 with the backsheet 6 continuously.

The electrolyte membrane 2 with the backsheet 6 fed from the electrolyte membrane unwinding roller 12 is suspended on the tension sensing roller 13 and pressed against the suction roller 20 by the separation roller 11. The separation roller 11 is an elastic roller. The separation roller 11 is placed in a position near the suction roller 20 spaced from the outer circumferential surface of the suction roller 20 at a given interval and supported in this position by a cylinder not shown in the drawings. The interval between the separation roller 11 and the outer circumferential surface of the suction roller 20 is smaller than the thickness of the electrolyte membrane 2 with the backsheet 6. Thus, when the electrolyte membrane 2 with the backsheet 6 passes between the separation roller 11 and the suction roller 20, the electrolyte membrane 2 is pressed against the suction roller 20. The force of the separation roller 11 pressing the electrolyte membrane 2 with the backsheet 6 against the suction roller 20 is controlled by adjusting the interval between the separation roller 11 and the suction roller 20 using the aforementioned cylinder.

By pressing the electrolyte membrane 2 against the suction roller 20 using the separation roller 11, the electrolyte membrane 2 is sucked on the outer circumferential surface of the suction roller 20. At this time, the backsheet 6 is separated from the electrolyte membrane 2 and suspended on the tension sensing roller 15. Then, the backsheet 6 is wound around the backsheet winding roller 14. Specifically, the separation roller 11 of the separation part 10 is to separate the backsheet 6 from the electrolyte membrane 2 with the backsheet 6 and to suck the electrolyte membrane 2 on the suction roller 20 by pressing the electrolyte membrane 2 against the suction roller 20.

The tension of the electrolyte membrane 2 with the backsheet 6 in a period from when this electrolyte membrane 2 is fed from the electrolyte membrane unwinding roller 12 to when this electrolyte membrane 2 reaches the separation roller 11 is sensed by the tension sensing roller 13. The tension sensing roller 13 measures a load acting on an axis with a load cell, thereby sensing working tension. The controller 90 controls rotation of the electrolyte membrane unwinding roller 12 in a manner such that the tension the electrolyte membrane 2 with the backsheet 6 sensed by the tension sensing roller 13 takes a predetermined value.

In response to the continuous rotation of the backsheet winding roller 14 by a motor not shown in the drawings, the backsheet 6 is wound around the backsheet winding roller 14 continuously and constant tension is applied to the backsheet 6 having been separated from the electrolyte membrane 2 by the separation roller 11. The tension applied to the backsheet 6 by the backsheet winding roller 14 is sensed by the tension sensing roller 15. Like the tension sensing roller 13, the tension sensing roller 15 measures a load acting on an axis with a load cell, thereby sensing working tension. The controller 90 controls rotation of the backsheet winding roller 14 in a manner such that the tension of the backsheet 6 sensed by the tension sensing roller 15 takes a predetermined value.

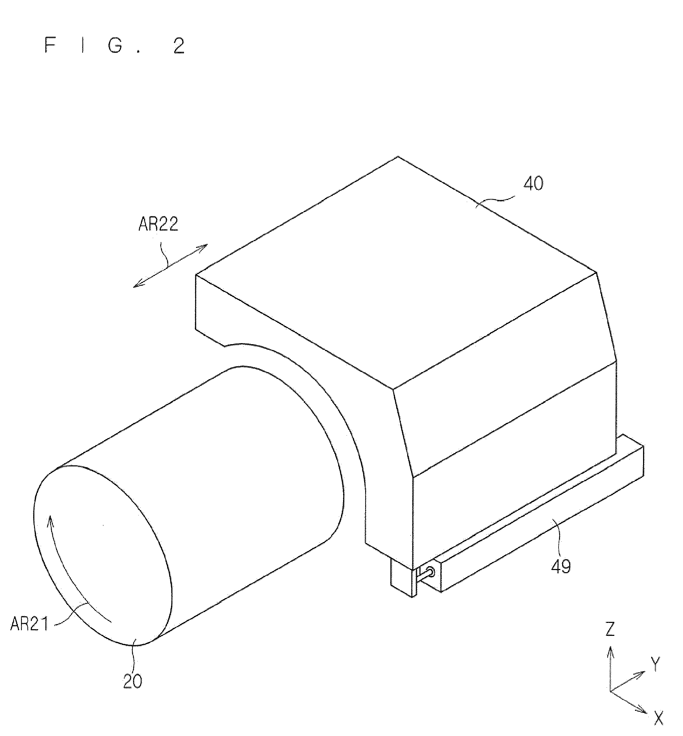

Fig. 2 is a perspective view showing the suction roller 20 and the drying furnace 40. The suction roller 20 is a columnar member placed in a manner such that a central axis of the suction roller 20 extends in a Y-axis direction. Regarding the size of the suction roller 20, a height (length in the Y-axis direction) is 400 mm and a diameter is from 400 to 1600 mm, for example. The suction roller 20 is rotated by a motor not shown in the drawings in a direction shown by an arrow AR21 in Fig. 2 about a central axis extending in the Y-axis direction.

The suction roller 20 is a porous roller made of porous carbon or porous ceramic. For example, a sintered body of alumina (Al₂O₃) or silicon carbide (SiC) can be used as the porous ceramic. The porous suction roller 20 has a pore diameter 5 µm or less and a porosity from 15 to 50%. The outer circumferential surface of the suction roller 20 (the circumferential surface of the column) has surface roughness of 5 µm or less in terms of Rz (maximum height) that is preferably as small as possible. Additionally, the total runout (fluctuations in a distance from a rotation axis to the outer circumferential surface) of the suction roller 20 during its rotation is set at 10 µm or less.

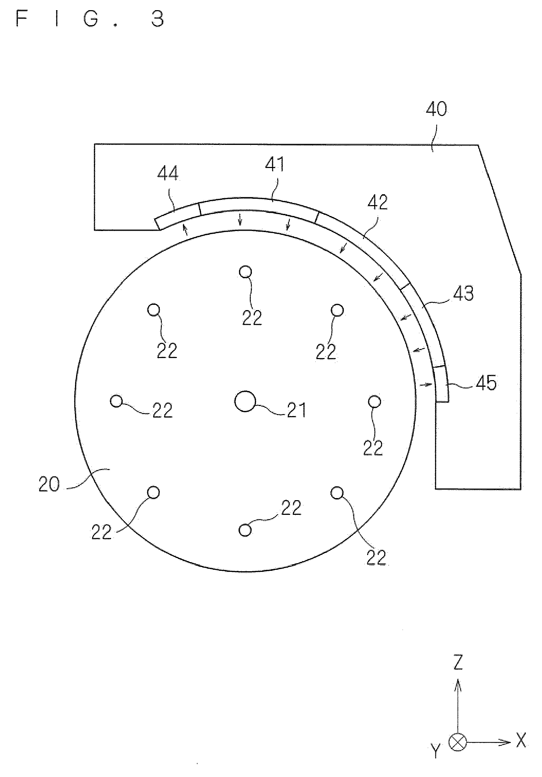

Fig. 3 shows the structure of the suction roller 20 and that of the drying furnace 40. A suction port 21 is provided in one of both of the upper surface and the bottom surface of the suction roller 20. In response to suction through the suction port 21 by a suction mechanism (exhaust pump, for example) provided outside the drawings, negative pressure is applied to the suction port 21. The suction roller 20 is made of a porous member having a porosity from 15 to 50%. Thus, as the negative pressure is applied to the suction port 21, negative pressure (pressure acting from surrounding atmosphere to cause suction on the outer circumferential surface of the suction roller 20) of a designated value acts uniformly on this outer circumferential surface through the internal pores. For example, in this preferred embodiment, as negative pressure of 80 kPa or more is applied to the suction port 21, negative pressure of 10 kPa or more acts uniformly on the outer circumferential surface of the suction roller 20. In this way, the electrolyte membrane 2 can be sucked uniformly and entirely on the suction roller 20 in the width direction (Y-axis direction).

The suction roller 20 is further provided with a plurality of water-cooled tubes 22. The water-cooled tubes 22 are arranged in a uniform density so as to circulate inside the suction roller 20. The water-cooled tubes 22 receive constant-temperature water controlled at a designated temperature supplied from a water supply mechanism provided outside the drawings. After flowing through the inside of each of the water-cooled tubes 22, the constant-temperature water is ejected to a drainage mechanism provided outside the drawings. By passing the constant-temperature water through the water-cooled tubes 22, the suction roller 20 is cooled.

Referring back to Fig. 1, the coating nozzle 30 is provided so as to face the outer circumferential surface of the suction roller 20. The coating nozzle 30 is provided downstream of the separation roller 11 in a direction where the electrolyte membrane 2 is transported by the suction roller 20. The coating nozzle 30 is a slit nozzle with a discharge port like a slit formed at the tip ((+X)-side end portion) of the coating nozzle 30. The discharge port like a slit extends longitudinally in the Y-axis direction. The coating nozzle 30 is provided in a position where the discharge port like a slit is spaced from the outer circumferential surface of the suction roller 20 at a given interval. The coating nozzle 30 is configured in a manner such that the position and the posture of the coating nozzle 30 relative to the suction roller 20 can be adjusted by a driving mechanism not shown in the drawings.

The coating nozzle 30 receives catalyst ink supplied as a coating liquid from a coating liquid supply mechanism 35. The coating liquid supply mechanism 35 has a tank storing the catalyst ink, a supply pipe communicatively connecting the tank and the coating nozzle 30, and an on-off valve provided to the supply pipe, etc. The coating liquid supply mechanism 35 can supply the catalyst ink continuously to the coating nozzle 30 by opening the on-off valve continuously. The coating liquid supply mechanism 35 can also supply the catalyst ink intermittently by opening and closing the on-off valve repeatedly.

The catalyst ink supplied from the coating liquid supply mechanism 35 is applied from the coating nozzle 30 to the electrolyte membrane 2 supported under suction and transported by the suction roller 20. If the coating liquid supply mechanism 35 supplies the catalyst ink continuously, the catalyst ink is applied to the electrolyte membrane 2 continuously. If the coating liquid supply mechanism 35 supplies the catalyst ink intermittently, the catalyst ink is applied to the electrolyte membrane 2 intermittently.

The drying furnace 40 is a hot-air drying furnace that dries the catalyst ink by ejecting hot air. The drying furnace 40 of this preferred embodiment is a movable unit. As shown by an arrow AR22 in Fig. 2, the drying furnace 40 can be moved slidingly in the Y-axis direction by a driving part 49. A publicly-known sliding movement mechanism such a cylinder or a combination of a motor and a ball screw can be used as the driving part 49.

The driving part 49 moves the drying furnace 40 between a processing position where the drying furnace 40 covers a part of the outer circumferential surface of the suction roller 20 and a standby position where the drying furnace 40 is isolated from the suction roller 20. Fig. 2 shows a condition where the drying furnace 40 is moved to the standby position isolated from the suction roller 20. As the driving part 49 moves the drying furnace 40 in the condition of Fig. 2 toward the -Y direction, the drying furnace 40 is moved from the standby position to the processing position.

The processing position where the drying furnace 40 covers a part of the outer circumferential surface of the suction roller 20 is a position where hot air is blown from the drying furnace 40 on the electrolyte membrane 2 supported under suction and transported by the suction roller 20 to dry the catalyst ink. As shown in Fig. 3, the suction roller 20, which faces the outer circumferential surface of the suction roller 20 when the suction roller 20 is in the processing position, has an inner wall surface divided into five zones including three drying zones 41, 42 and 43 and two heat-shielding zones 44 and 45. While the drying furnace 40 is placed in the processing position, hot air is blown toward the outer circumferential surface of the suction roller 20 from each of the three drying zones 41, 42, and 43 in response to feed of the hot air from a hot-air feeder provided outside the drawings. The blow of the hot air from the drying furnace 40 dries the catalyst ink applied to the electrolyte membrane 2.

Hot air to be blown from the three drying zones 41, 42, and 43 differs in temperature between the drying zones 41, 42, and 43. The temperature of the hot air to be blown from the three drying zones 41, 42, and 43 is increased sequentially in order from an upstream side toward a downstream side in the direction where the electrolyte membrane 2 is transported by the suction roller 20 (in a clockwise direction on the plane of Fig. 3). For example, a hot-air temperature from the most upstream drying zone 41 is in a range from a room temperature to 40°C, a hot-air temperature from the intermediate drying zone 42 is from 40 to 80°C, and a hot-air temperature from the most downstream drying zone 43 is from 50 to 100°C.

The two heat-shielding zones 44 and 45 are provided on opposite ends of the drying zones 41, 42, and 43 as viewed in the transport direction of the electrolyte membrane 2. The heat-shielding zone 44 is provided upstream of the drying zone 41. The heat-shielding zone 45 is provided downstream of the drying zone 43. While the drying furnace 40 is placed in the processing position, atmosphere in the vicinity of the outer circumferential surface of the suction roller 20 is sucked into the two heat-shielding zones 44 and 45 in response to exhaust of air by an exhaust mechanism provided outside the drawings. This can prevent hot air blown from the drying zones 41, 42, and 43 of the drying furnace 40 in the processing position from passing over the drying furnace 40 and flowing into an upstream side and a downstream side of the suction roller 20. This can also prevent solvent vapor, etc. resulting from the catalyst ink during drying from leaking to the outside of the drying furnace 40. If hot air blown from the drying zones 41, 42, and 43 flows into the coating nozzle 30 and dries the discharge port and its vicinity, a coating failure may occur. Such a coating failure can be prevented by providing at least the upstream heat-shielding zone 44.

The standby position where the drying furnace 40 is isolated from the suction roller 20 is a position where the drying furnace 40 is on standby when transport of the electrolyte membrane 2 is stopped and rotation of the suction roller 20 is also stopped. In this preferred embodiment, if the drying furnace 40 is moved to the standby position, the drying furnace 40 continues operation under a processing condition same as that for heating process in the processing position. This operation is described in detail below.

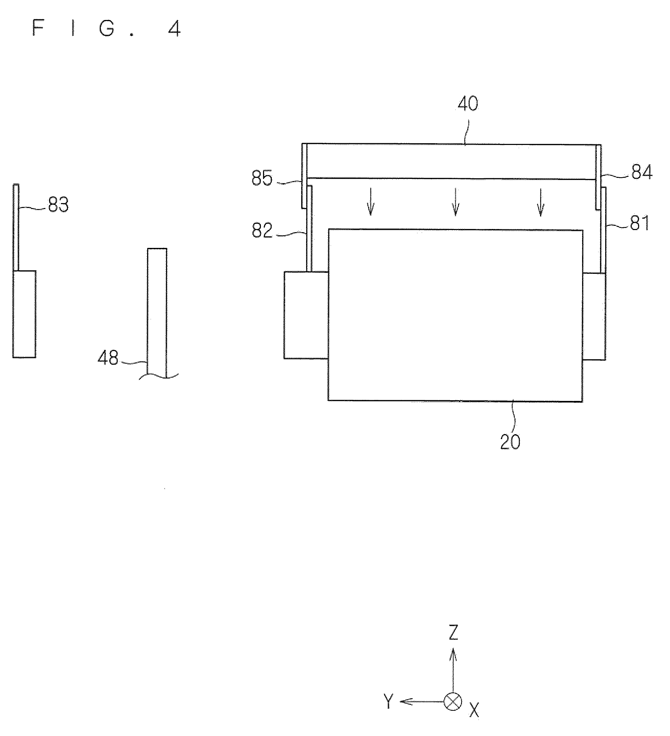

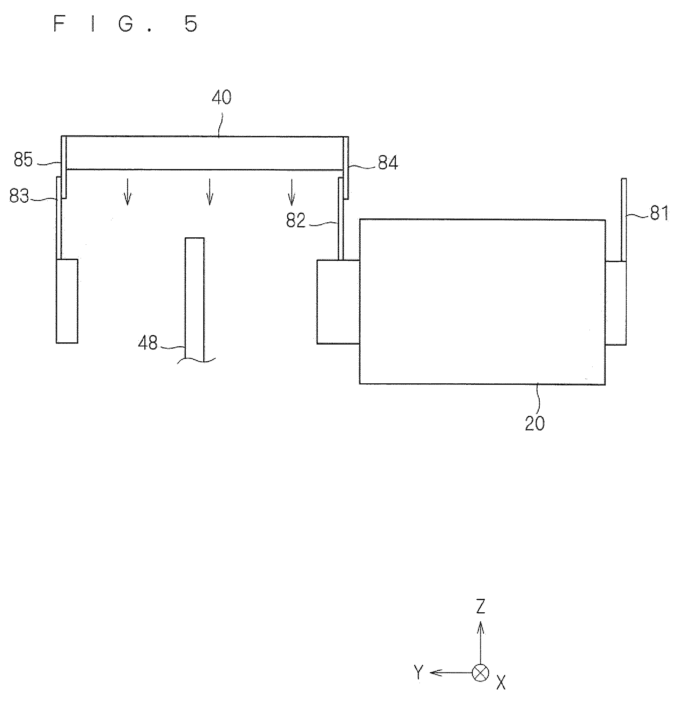

Fig. 4 is a front view showing the suction roller 20 and the drying furnace 40 while the drying furnace 40 is placed in the processing position. Fig. 5 is a front view showing the suction roller 20 and the drying furnace 40 while the drying furnace 40 is placed in the standby position. An exhaust pipe 48 is provided in the standby position of the drying furnace 40. The exhaust pipe 48 is connected to an exhaust mechanism provided outside the drawings (this exhaust mechanism may be the same as the exhaust mechanism for the heat-shielding zones 44 and 45). Hot air ejected from the drying furnace 40 in the standby position is exhausted through the exhaust pipe 48.

As shown in Figs. 4 and 5, a sealing plate 84 and a sealing plate 85 are provided on opposite sides of the drying furnace 40. Further, three shielding plates 81, 82, and 83 are provided. As shown in Fig. 4, while the drying furnace 40 is placed in the processing position, the sealing plate 84 abuts on the shielding plate 81 and the sealing plate 85 abuts on the shielding plate 82. This separates atmosphere in the standby position and atmosphere in the processing position. As shown in Fig. 5, while the drying furnace 40 is placed in the standby position, the sealing plate 84 abuts on the shielding plate 82 and the sealing plate 85 abuts on the shielding plate 83. This separates atmosphere in the standby position and atmosphere in the processing position. Specifically, the sealing plates 84 and 85 and the shielding plates 81, 82, and 83 form a shielding mechanism that separates atmosphere in the standby position and atmosphere in the processing position. In this way, regardless of whether the drying furnace 40 is placed in the processing position or in the standby position, atmospheres in respective spaces are separated from each other.

Referring back to Fig. 1, the attachment part 50 is provided downstream of the drying furnace 40 in the processing position in the direction where the electrolyte membrane 2 is transported by the suction roller 20. The attachment part 50 includes a laminate roller 51. The laminate roller 51 is placed in a position near the suction roller 20 spaced from the outer circumferential surface of the suction roller 20 at a given interval and supported in this position by a cylinder not shown in the drawings. The interval between the laminate roller 51 and the outer circumferential surface of the suction roller 20 is smaller than the thickness of the electrolyte membrane 2 after being subjected to drying process (a total of the thickness of the electrolyte membrane 2 and that of a catalyst layer). Thus, when the electrolyte membrane 2 after being subjected to the drying process passes between the laminate roller 51 and the suction roller 20, the electrolyte membrane 2 is pressed against the outer circumferential surface of the suction roller 20 by the laminate roller 51. The force of the laminate roller 51 pressing the electrolyte membrane 2 is controlled by adjusting the interval between the laminate roller 51 and the suction roller 20 using the aforementioned cylinder.

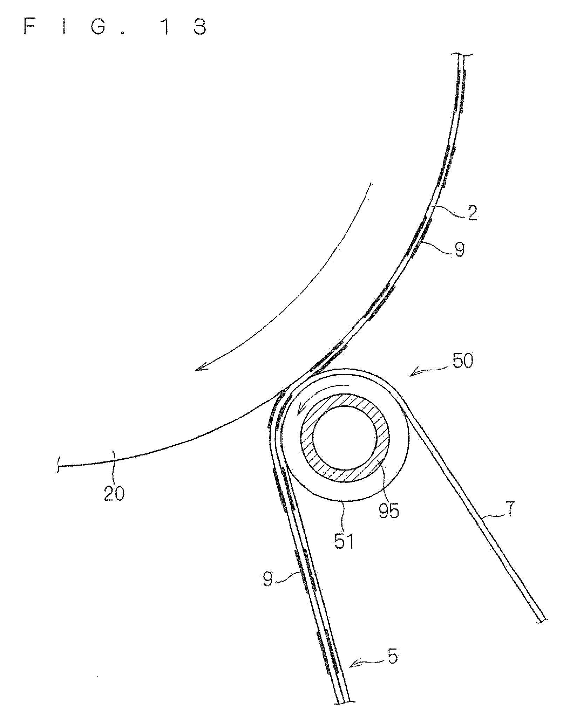

The laminate roller 51 can be a metal roller having a width substantially the same as that of the suction roller 20, for example. The laminate roller 51 includes a heater 95 provided inside the laminate roller 51 (see Fig. 13). The heater 95 may be a sheathed heater, for example. The heater 95 controls the laminate roller 51 at a designated temperature. The temperature of the roller surface of the laminate roller 51 is measured with a radiation thermometer not shown in the drawings. Based on a result of the measurement with the radiation thermometer, the controller 90 controls the heater 95 so as to place the roller surface at the designated temperature. The laminate roller 51 may have any appropriate diameter.

The manufacturing apparatus 1 further includes a support film unwinding roller 55, a coated membrane winding roller 56, and a tension sensing roller 52 and a tension sensing roller 53. The support film unwinding roller 55 is rotated continuously by a motor not shown in the drawings. A band-shaped support film 7 is wound around the support film unwinding roller 55. The support film unwinding roller 55 supplies the support film 7 continuously toward the suction roller 20. The support film 7 fed from the support film unwinding roller 55 is suspended on the tension sensing roller 52 and laminated on the electrolyte membrane 2 through laminating process by the laminate roller 51 and the suction roller 20.

The tension of the support film 7 fed from the support film unwinding roller 55 to be supplied the suction roller 20 is sensed by the tension sensing roller 52. Like the tension sensing roller 13, the tension sensing roller 52 measures a load acting on an axis with a load cell, thereby sensing working tension. The controller 90 controls rotation of the support film unwinding roller 55 in a manner such that the tension of the support film 7 sensed by the tension sensing roller 52 takes a predetermined value.

As a result of the laminating process by the laminate roller 51 and the suction roller 20, the support film 7 is laminated on a catalyst-coated membrane 5. The catalyst-coated membrane 5 moves away from the outer circumferential surface of the suction roller 20 and is suspended on the tension sensing roller 53. Then, the catalyst-coated membrane 5 is wound around the coated membrane winding roller 56. As the coated membrane winding roller 56 is rotated continuously by a motor not shown in the drawings, the catalyst-coated membrane 5 is wound around the coated membrane winding roller 56 and constant tension is applied to the catalyst-coated membrane 5 spaced from the suction roller 20. The tension applied to the catalyst-coated membrane 5 by the coated membrane winding roller 56 is sensed by the tension sensing roller 53. Like the tension sensing roller 13, the tension sensing roller 53 measures a load acting on an axis with a load cell, thereby sensing working tension. The controller 90 controls rotation of the coated membrane winding roller 56 in a manner such that the tension of the catalyst-coated membrane 5 sensed by the tension sensing roller 53 takes a predetermined value.

The manufacturing apparatus 1 further includes a surface cooling part 60. The surface cooling part 60 is provided in a position facing the outer circumferential surface of the suction roller 20 and between the attachment part 50 and the separation part 10. The surface cooling part 60 includes an air nozzle from which cooling air (cooled to a temperature about 5°C, for example) is blown toward the outer circumferential surface of the suction roller 20. The blow of the cooling air from the surface cooling part 60 cools the outer circumferential surface of the suction roller 20. The surface cooling part 60 is provided between the attachment part 50 and the separation part 10. Thus, the air is to be blown on the outer circumferential surface of the suction roller 20 in a place where the electrolyte membrane 2 is not sucked.

The manufacturing apparatus 1 further includes the following sensors for testing a coating condition: a test camera 71, a test camera 75, a fiber sensor 72, a fiber sensor 74, and a laser displacement meter 73. The test cameras 71 and 75 are each formed of a CCD camera, for example. The test camera 71 is provided in a position facing the roller surface of the tension sensing roller 13. The test camera 71 detects the position of a catalyst layer in the width direction (position in the Y-axis direction) formed on the electrolyte membrane 2 suspended on the tension sensing roller 13. The test camera 75 is provided in a position facing the outer circumferential surface of the suction roller 20 and downstream of the coating nozzle 30 in the transport direction of the electrolyte membrane 2. The test camera 75 detects the position of a coating film in the width direction (position in the Y-axis direction) immediately after the coating film is applied from the coating nozzle 30.

Each of the fiber sensors 72 and 74 is a sensor that emits light having been transmitted inside an optical fiber and detects the presence of a target using reflected light of the emitted light. The fiber sensor 72 is provided in a position facing the outer circumferential surface of the suction roller 20 and upstream of the coating nozzle 30 in the transport direction of the electrolyte membrane 2. The fiber sensor 72 detects the position of a catalyst layer in the transport direction (position in the circumferential direction of the suction roller 20) formed on the electrolyte membrane 2 before the electrolyte membrane 2 is subjected to coating process. The other fiber sensor 74 is provided in a position facing the outer circumferential surface of the suction roller 20 and downstream of the coating nozzle 30 in the transport direction of the electrolyte membrane 2. The fiber sensor 74 detects the position of a coating film in the transport direction (position in the circumferential direction of the suction roller 20) immediately after the coating film is applied from the coating nozzle 30.

The laser displacement meter 73 detects an amount of displacement from reflected light of emitted laser light to a target. The laser displacement meter 73 is provided in a position facing the outer circumferential surface of the suction roller 20 and downstream of the coating nozzle 30 in the transport direction of the electrolyte membrane 2. The laser displacement meter 73 detects the thickness of a coating film immediately after the coating film is applied from the coating nozzle 30. In Fig. 1, the laser displacement meter 73, the fiber sensor 74, and the test camera 75 are arranged in this order as viewed from an upstream side in the transport direction of the electrolyte membrane 2. However, this is not the only arrangement of these three sensors but these sensors can be arranged in any order.

The manufacturing apparatus 1 further includes the controller 90 that controls each mechanism of the apparatus. The hardware structure of the controller 90 is the same as that of a generally-used computer. Specifically, the controller 90 includes a CPU for various arithmetic operations, a ROM as a read-only memory storing a basic program, a RAM as a freely readable and writable memory storing information of various types, and a magnetic disk storing control software or control data. In response to execution of a designated processing program by the CPU in the controller 90, each operating mechanism in the manufacturing apparatus 1 is controlled and process of manufacturing the catalyst-coated membrane 5 proceeds.

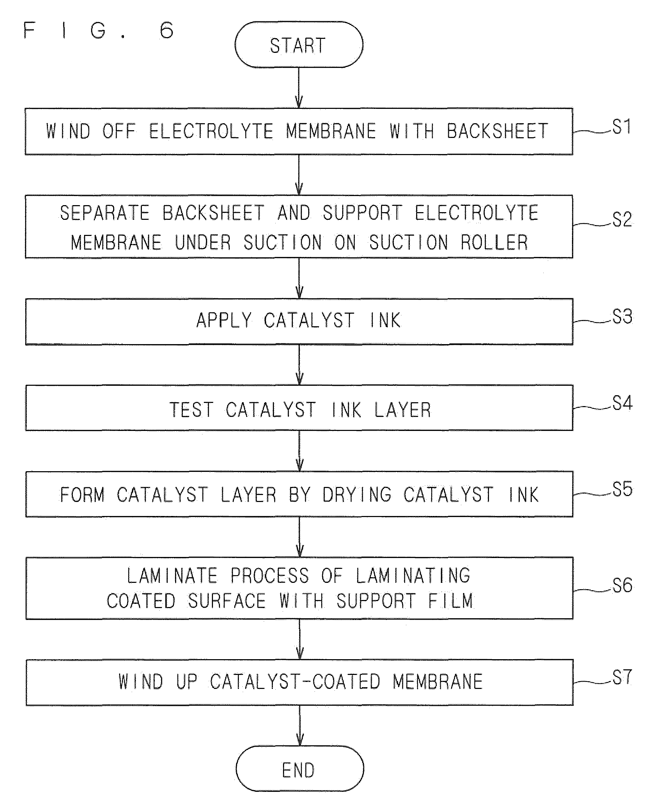

A procedure taken by the manufacturing apparatus 1 with the aforementioned structure for manufacturing a catalyst-coated membrane is described next. First, a procedure of manufacturing the catalyst-coated membrane 5 is described. What is described next is how the manufacturing apparatus 1 operates when transport of the electrolyte membrane 2 is stopped. Fig. 6 is a flowchart showing a procedure of manufacturing the catalyst-coated membrane 5 using the manufacturing apparatus 1. The procedure of manufacturing the catalyst-coated membrane 5 described below proceeds as each operating mechanism in the manufacturing apparatus 1 is controlled by the controller 90.

First, the electrolyte membrane 2 with the backsheet 6 is wound off the electrolyte membrane unwinding roller 12 (step S1). A fluorine-based or hydrocarbon-based polymer electrolyte membrane conventionally used for forming a catalyst-coated membrane of a polymer electrolyte fuel cell can be used as the electrolyte membrane 2 as a base material. For example, a polymer electrolyte membrane containing perfluorocarbon sulfonic acid (such as Nafion (registered trademark) available from USA DuPont, Flemion (registered trademark) available from Asahi Glass Co. Ltd., Aciplex (registered trademark) available from Asahi Kasei Corporation, or Goreselect (registered trademark) available from Gore) can be used as the electrolyte membrane 2.

The electrolyte membrane 2 is very thin and does not have strong mechanism strength. The electrolyte membrane 2 has a feature in that it swells easily with even a small amount of moisture in the atmosphere and shrinks with humidity reduction. In this way, the electrolyte membrane 2 is very likely to be deformed. In this regard, with the intention of preventing deformation of the electrolyte membrane 2, the electrolyte membrane 2 with the backsheet 6 is wound around the electrolyte membrane unwinding roller 12 in an initial condition. The electrolyte membrane 2 is deformed considerably easily even with a small amount of moisture in the atmosphere. Thus, at a time when the electrolyte membrane 2 is wound during its manufacture, the backsheet 6 as a band-shaped resin film is laminated on the electrolyte membrane 2 with the intention of retaining the shape of the electrolyte membrane 2.

A resin material having sufficient mechanism strength and an excellent function of retaining a shape is used for forming the backsheet 6. For example, a polyethylene naphthalate (PEN) or polyethylene terephthalate (PET) film can be used. In this preferred embodiment, the backsheet 6 is laminated on the rear surface of the electrolyte membrane 2. The feature of the electrolyte membrane 2 as an electrolyte membrane does not differ between a front surface and a rear surface. A surface on which the backsheet 6 is formed is called the rear surface merely for the purpose of distinguishing between the front surface and the rear surface.

The electrolyte membrane 2 with the backsheet 6 in the initial condition wound around the electrolyte membrane unwinding roller 12 has a thickness from 5 to 30 µm and a width of about 300 mm at a maximum. The backsheet 6 has a thickness from 25 to 100 µm and a width substantially the same as or slightly larger than that of the electrolyte membrane 2.

In this preferred embodiment, a catalyst layer already exists on the front surface of the electrolyte membrane 2. The catalyst layer on the front surface is formed using a coating apparatus different from the manufacturing apparatus 1 of the present invention. In this coating apparatus, while the electrolyte membrane 2 with the backsheet 6 laminated on the electrolyte membrane 2 is transported as it is in a roll-to-roll system, catalyst ink is applied intermittently to the front surface of the electrolyte membrane 2 and the resultant coating film is dried, thereby forming the catalyst layer. While the catalyst layer is formed on the front surface, the backsheet 6 remains laminated on the rear surface of the electrolyte membrane 2, thereby preventing deformation of the electrolyte membrane 2.

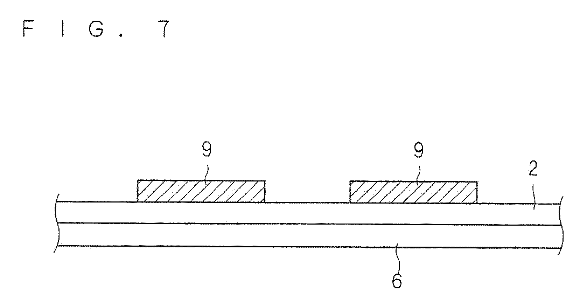

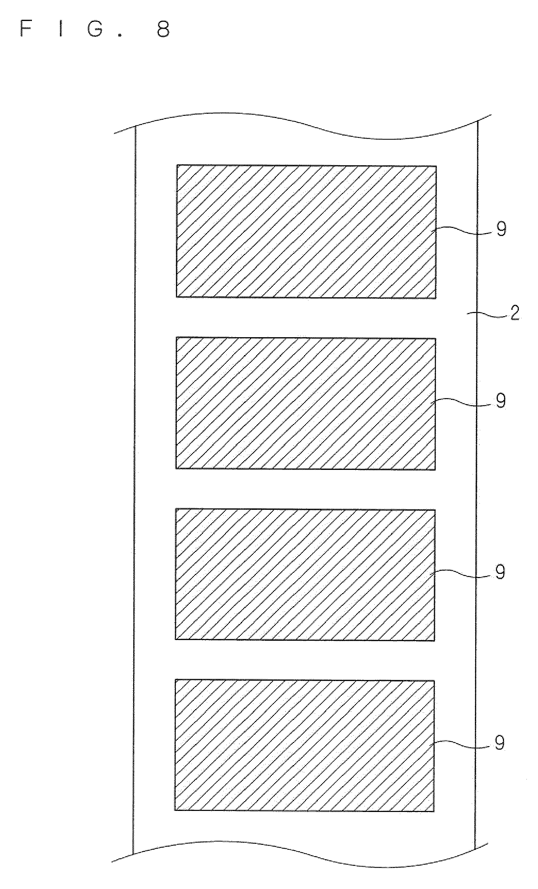

Fig. 7 is a sectional view of the electrolyte membrane 2 at a time when the electrolyte membrane 2 is wound off the electrolyte membrane unwinding roller 12. Fig. 8 shows catalyst layers 9 formed on the front surface of the electrolyte membrane 2. As shown in Figs. 7 and 8, the catalyst layers 9 of a constant size are formed discontinuously and spaced at regular intervals on the front surface of the electrolyte membrane 2. The backsheet 6 is laminated on the rear surface of the electrolyte membrane 2.

The electrolyte membrane 2 with the backsheet 6 such as that shown in Fig. 7 is wound off the electrolyte membrane unwinding roller 12, suspended on the tension sensing roller 13, and fed to the separation part 10. The tension of the electrolyte membrane 2 with the backsheet 6 in a period from when this electrolyte membrane 2 is fed from the electrolyte membrane unwinding roller 12 to when this electrolyte membrane 2 reaches the separation roller 11 is sensed by the tension sensing roller 13. Rotation of the electrolyte membrane unwinding roller 12 is controlled in a manner such that the sensed value takes a predetermined value. The tension sensing roller 13 contacts the backsheet 6. Specifically, the tension sensing roller 13 does not contact the electrolyte membrane 2 directly. This can prevent deformation of the electrolyte membrane 2 to be caused by contact with the tension sensing roller 13.

When the electrolyte membrane 2 with the backsheet 6 passes through the tension sensing roller 13, the position of the catalyst layer 9 in the width direction (position in the Y-axis direction) formed on the front surface of the electrolyte membrane 2 is detected by the test camera 71. When the electrolyte membrane 2 with the backsheet 6 passes through the tension sensing roller 13, the electrolyte membrane 2 to which the backsheet 6 is laminated contacts the tension sensing roller 13 on the rear surface (to be exact, the backsheet 6 contacts the tension sensing roller 13). Thus, the test camera 71 is allowed to detect the position of the catalyst layer 9 in the width direction by capturing an image of the electrolyte membrane 2 from the direction of the front surface on which the catalyst layer 9 is formed. The position of the catalyst layer 9 in the width direction detected by the test camera 71 is transmitted to the controller 90.

In the separation part 10, the front surface of the electrolyte membrane 2 with the backsheet 6 is pressed against the suction roller 20 by the separation roller 11, thereby separating the backsheet 6 and supporting the electrolyte membrane 2 under suction on the suction roller 20 (step S2). In other words, the separation roller 11 separates the backsheet 6 from the rear surface of the electrolyte membrane 2 while the front surface of the electrolyte membrane 2 is sucked on the suction roller 20.

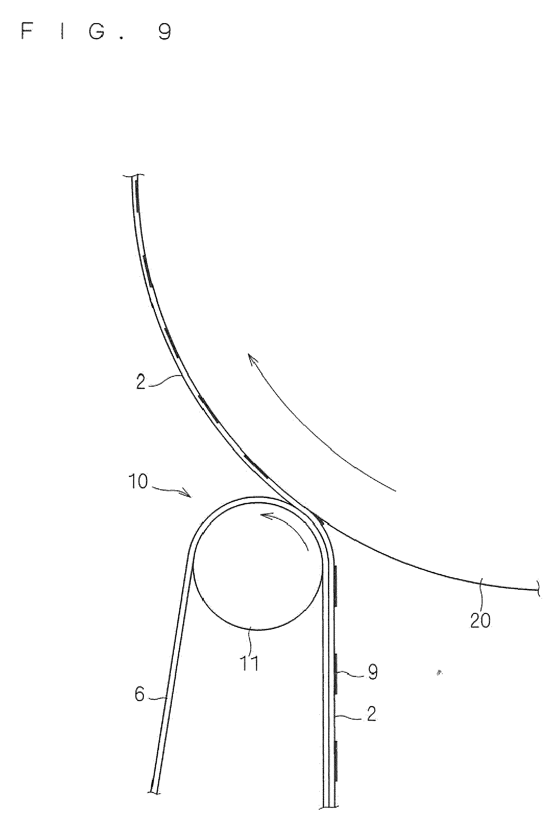

Fig. 9 shows how the backsheet 6 is separated and the electrolyte membrane 2 is sucked on the suction roller 20 by the separation roller 11. The electrolyte membrane 2 with the backsheet 6 fed from the electrolyte membrane unwinding roller 12 is caught between the separation roller 11 and the suction roller 20. At this time, the backsheet 6 is separated from the rear surface of the electrolyte membrane 2 and the front surface of the electrolyte membrane 2 is sucked on the suction roller 20. The catalyst layers 9 are formed on the front surface of the electrolyte membrane 2. As shown in Fig. 9, these catalyst layers 9 and the front surface of the electrolyte membrane 2 are sucked together on the outer circumferential surface of the suction roller 20.

The separation roller 11 presses the electrolyte membrane 2 against the suction roller 20 by applying force within a range that allows the electrolyte membrane 2 to be sucked on the outer circumferential surface of the suction roller 20 reliably without causing deformation of the electrolyte membrane 2 of low strength. The separation roller 11 is placed in a position near the suction roller 20 spaced from the outer circumferential surface of the suction roller 20 at a given interval. The force of the separation roller 11 pressing the electrolyte membrane 2 with the backsheet 6 against the suction roller 20 is controlled using this interval.

The front surface of the electrolyte membrane 2 is sucked on the suction roller 20. By applying negative pressure of 80 kPA or more to the suction port 21 of the suction roller 20 made of the porous ceramic having a porosity from 15 to 50%, negative pressure of 10 kPa or more acts uniformly on the outer circumferential surface of the suction roller 20 both in the cases where the electrolyte membrane 2 is sucked on the suction roller 20 or not. This allows the electrolyte membrane 2 to be stably supported under suction on the suction roller 20 with constant suction pressure independently of the size of the width of the electrolyte membrane 2. This can also suppress deformation of the electrolyte membrane 2 to be caused by the suction on the suction roller 20.

The outer circumferential surface of the suction roller 20 has surface roughness of 5 µm or less in terms of Rz and the suction roller 20 has a pore diameter of 5 µm or less. Thus, supporting the electrolyte membrane 2 under suction is unlikely to create a suction mark on the electrolyte membrane 2. Specifically, the suction roller 20 of this preferred embodiment can support the electrolyte membrane 2 under suction stably without deforming the electrolyte membrane 2 of brittle mechanical properties or without creating a suction mark.

As shown in Fig. 9, the suction roller 20 supporting the electrolyte membrane 2 under suction rotates about the central axis extending in the Y-axis direction as a rotation center, thereby transporting the electrolyte membrane 2 from which the backsheet 6 has been separated while supporting the electrolyte membrane 2 on the outer circumferential surface of the suction roller 20. The backsheet 6 having been separated from the electrolyte membrane 2 is suspended on the tension sensing roller 15 and wound around the backsheet winding roller 14. The tension of the backsheet 6 in a period from when the backsheet 6 is separated from the electrolyte membrane 2 by the separation roller 11 to when the backsheet 6 reaches the backsheet winding roller 14 is sensed by the tension sensing roller 15. Rotation of the backsheet winding roller 14 is controlled in a manner such that the sensed value takes a predetermined value.

Before the electrolyte membrane 2 supported under suction and transported by the suction roller 20 reaches the coating nozzle 30, the position of the catalyst layer 9 in the transport direction (position in the circumferential direction of the suction roller 20) formed on the front surface of the electrolyte membrane 2 is detected by the fiber sensor 72. At this time, the front surface of the electrolyte membrane 2 on which the catalyst layer 9 is formed is sucked on the suction roller 20. This makes the fiber sensor 72 detect the position of the catalyst layer 9 from the direction of the rear surface of the electrolyte membrane 2. Meanwhile, the electrolyte membrane 2 is a semi-transparent membrane. This allows the fiber sensor 72 to detect the catalyst layer 9 on the front surface of the electrolyte membrane 2 even from the direction of the rear surface of the electrolyte membrane 2. The position of the catalyst layer 9 in the transport direction detected by the fiber sensor 72 is transmitted to the controller 90.

Next, catalyst ink is applied from the coating nozzle 30 to the rear surface of the electrolyte membrane 2 supported under suction and transported by the suction roller 20 (step S3). The catalyst ink used in this preferred embodiment contains catalyst particles, an ion-conducting electrolyte, and a dispersion medium, for example. The catalyst particles may be any publicly-known or commercially-available catalyst particles and are not particularly limited as long as they can produce a fuel cell reaction in the anode or the cathode of a polymer electrolyte fuel cell. Examples of the catalyst particles to be used include those of platinum (Pt), a platinum alloy, and a platinum compound. The platinum alloy mentioned herein may be an alloy of platinum and metal of at least one type selected from the group consisting of ruthenium (Ru), palladium (Pd), nickel (Ni), molybdenum (Mo), iridium (Ir), and iron (Fe), for example. Generally, platinum particles are used as catalyst particles of catalyst ink for a cathode and particles of the aforementioned platinum alloy are used as catalyst particles of catalyst ink for an anode.

The catalyst particles may also be what is called catalyst-supporting carbon power including catalyst fine particles supported on carbon powder. An average particle diameter of the catalyst-supporting carbon is generally from about 10 to about 100 nm, preferably from about 20 to about 80 nm, most preferably from about 40 to about 50 nm. The carbon powder supporting the catalyst fine particles is not particularly limited. Examples of this carbon power include carbon blacks such as channel black, furnace black, ketjen black, acetylene black, and lamp black, graphite, activated carbon, carbon fibers, and carbon nanotubes. These materials may be used alone or in combination of two or more.

A solvent is added to the aforementioned catalyst particles to form a paste that can be applied from the slit nozzle. Examples of the solvent to be used include water, alcohol-based solvents such as ethanol solvents, n-propanol solvents, and n-butanol solvents, and organic solvents such as ether-based solvents, ester-based solvents, and fluorine-based solvents.

Next, a polyelectrolyte solution prepared by dispersing ionomer having an ion-exchange group in the aforementioned solvent is added to a solution prepared by adding the solvent to the catalyst particles. As an example, catalyst ink can be obtained by dispersing carbon black supporting 50 wt% of platinum ("TEC10E50E" available from TANAKA KIKINZOKU KOGYO K.K.) in a solution of water, ethanol, and polyelectrolyte (Nafion liquid "D2020" available from USA DuPont).

The resultant paste formed by the aforementioned mixture is supplied as catalyst ink from the coating liquid supply mechanism 35 to the coating nozzle 30. The catalyst ink supplied from the coating liquid supply mechanism 35 is applied from the coating nozzle 30 to the rear surface of the electrolyte membrane 2. The catalyst ink to be applied to the electrolyte membrane 2 may be ink either for a cathode or an anode. Meanwhile, this catalyst ink to be applied to the rear surface has polarity opposite to that of the catalyst layer 9 formed on the front surface.

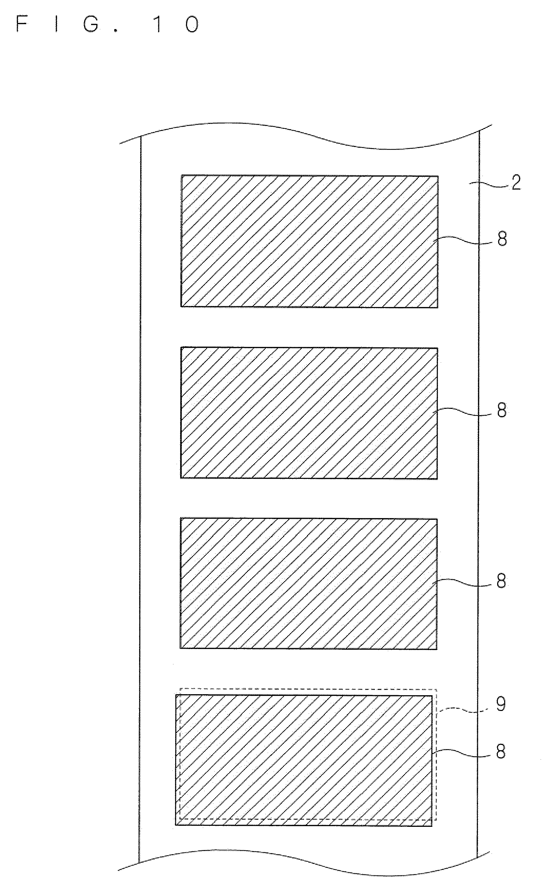

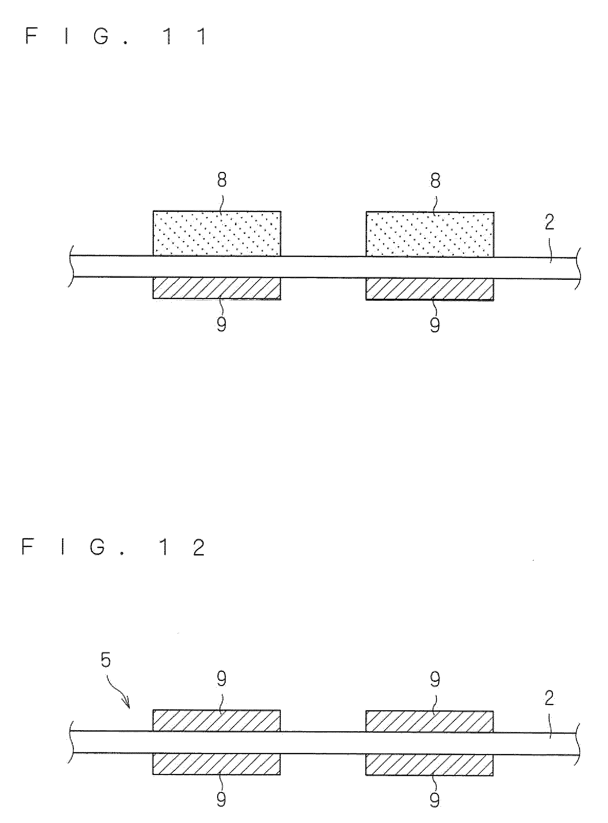

In this preferred embodiment, the coating liquid supply mechanism 35 supplies the catalyst ink intermittently to the coating nozzle 30, thereby applying the catalyst ink from the coating nozzle 30 intermittently to the rear surface of the electrolyte membrane 2 supported under suction and transported by the suction roller 20. Fig. 10 shows the electrolyte membrane 2 and the catalyst ink applied intermittently to the electrolyte membrane 2. Fig. 11 is a sectional view of the electrolyte membrane 2 coated with the catalyst ink applied intermittently. By discharging the catalyst ink intermittently from the coating nozzle 30 to the electrolyte membrane 2 supported under suction and transported at a constant speed by the suction roller 20, catalyst ink layers 8 of a constant size are formed discontinuously on the rear surface of the electrolyte membrane 2 so as to be spaced at regular intervals, as shown in Figs. 10 and 11.

The total runout of the suction roller 20 during its rotation is 10 µm or less and the surface roughness of the outer circumferential surface of the suction roller 20 is 5 µm or less in terms of Rz. This stably keeps an interval between the outer circumferential surface of the suction roller 20 and the discharge port like a slit of the coating nozzle 30 at a substantially constant value during rotation of the suction roller 20. Thus, as a result of the intermittent application from the coating nozzle 30, the catalyst ink layers 8 can be formed uniformly with a high degree of accuracy.

The width of each catalyst ink layer 8 formed on the rear surface of the electrolyte membrane 2 is determined by the width of the discharge port like a slit of the coating nozzle 30. The length of each catalyst ink layer 8 is determined by a period of time when the catalyst ink is discharged from the coating nozzle 30 and the transport speed of the electrolyte membrane 2 (specifically, the rotation speed the suction roller 20). The thickness (height) of each catalyst ink layer 8 is determined by a distance between the discharge port of the coating nozzle 30 and the rear surface of the electrolyte membrane 2, a flow rate at which the catalyst ink is discharged, and the transport speed of the electrolyte membrane 2. This thickness is from 10 to 300 µm, for example. The catalyst ink is in a paste form that can be applied from the coating nozzle 30. The catalyst ink has viscosity that allows retention of the shape of the catalyst ink layer 8 on the electrolyte membrane 2.

The catalyst ink from the coating nozzle 30 is applied to the rear surface of the electrolyte membrane 2 in a region where the catalyst layer 9 is already formed on the front surface of this region. Specifically, the catalyst ink from the coating nozzle 30 is applied to the opposite surface (rear surface) in the same region as the catalyst layer 9 on the front surface. More specifically, based on information about the position of the catalyst layer 9 in the width direction formed on the front surface detected by the test camera 71, the controller 90 makes fine adjustment of the position of the coating nozzle 30 in the Y-axis direction in a manner such that the catalyst ink is applied to the same position in the width direction on the rear surface. Further, based on information about the position of the catalyst layer 9 in the transport direction detected by the fiber sensor 72, the controller 90 controls timing of discharge from the coating nozzle 30 in a manner such that the catalyst ink is applied to the same position on the rear surface. In this way, the catalyst ink layer 8 is formed on the rear surface of the electrolyte membrane 2 in the same region as the catalyst layer 9 on the front surface, as shown in Fig. 11.

Next, the catalyst ink layer 8 as a coating film formed by the application of the catalyst ink from the coating nozzle 30 is tested (step S4). This test is to examine the coating condition of the catalyst ink layer 8. More specifically, the position of the catalyst ink layer 8 in the width direction, that of the catalyst ink layer 8 in the transport direction, and the thickness of the catalyst ink layer 8 are tested. These tests are conducted using the laser displacement meter 73, the fiber sensor 74, and the test camera 75 provided downstream of the coating nozzle 30 in the transport direction of the electrolyte membrane 2.

The laser displacement meter 73 detects the thickness of the catalyst ink layer 8 immediately after the catalyst ink layer 8 is formed by the application from the coating nozzle 30. The fiber sensor 74 detects the position of this catalyst ink layer 8 in the transport direction. The test camera 75 detects the position of this catalyst ink layer 8 in the width direction. Results of these detections are transmitted to the controller 90. Based on the results of these detections obtained by the laser displacement meter 73, the fiber sensor 74, and the test camera 75, the controller 90 determines whether the catalyst ink layer 8 is formed in the same region as the catalyst layer 9 on the front surface into a predetermined thickness.

Fig. 10 shows an example at the bottom of the drawing illustrating a coating region of the catalyst ink layer 8 shifted from a forming region of the catalyst layer 9 on the front surface. In this illustration, both the position of the catalyst ink layer 8 in the width direction and that of the catalyst ink layer 8 in the transport direction are shifted from corresponding positions of the forming region of the catalyst layer 9 on the front surface. Such position shifts of the catalyst ink layer 8 are determined by the controller 90 based on the results of the detections by the fiber sensor 74 and the test camera 75.

Next, the suction roller 20 rotates to transport the catalyst ink layer 8 on the rear surface of the electrolyte membrane 2 to a position facing the drying furnace 40. Then, the drying process is performed on the catalyst ink layer 8 (step S5). For the drying process on the catalyst ink layer 8, the drying furnace 40 is moved to the processing position. The drying process on the catalyst ink layer 8 is performed by blowing hot air from the drying furnace 40 on the catalyst ink layer 8. The blow of the hot air heats the catalyst ink layer 8 to volatilize the solvent component, thereby drying the catalyst ink layer 8. As a result of the volatilization of the solvent component, the catalyst ink layer 8 is dried to become the catalyst layer 9.

Fig. 12 is a sectional view of the electrolyte membrane 2 with the catalyst layer formed on each of the front surface and the rear surface of the electrolyte membrane 2. The catalyst layer 9 is an electrode layer on which catalyst particles such as those of platinum are supported. The catalyst layer 9 results from the volatilization of the solvent component in the catalyst ink layer 8 and solidification of the catalyst ink layer 8, so that it is thinner than the catalyst ink layer 8. For example, the thickness of the catalyst layer 9 formed after the drying is from 3 to 50 µm. Fig. 12 shows the catalyst-coated membrane 5 including the electrolyte membrane 2 and the catalyst layer 9 formed on each of the front surface and the rear surface of the electrolyte membrane 2.

The drying furnace 40 includes the three drying zones 41, 42, and 43. Hot air to be blown from these drying zones differs in temperature between the drying zones. More specifically, the temperature of the hot air is increased sequentially in the following order: the most upstream drying zone 41 in the direction where the electrolyte membrane 2 is transported by the suction roller 20, the intermediate drying zone 42, and the most downstream drying zone 43. If the drying furnace 40 is not divided into drying zones and hot air at a high temperature is blown on the catalyst ink layer 8 immediately after being applied, the catalyst ink layer 8 is dried rapidly. This may cause a crack in a surface in some cases. Such a crack may also be caused if a heater is buried in the suction roller 20 and the catalyst ink layer 8 is dried rapidly by this heater immediately after being applied.

In this preferred embodiment, the drying furnace 40 is divided into the three drying zones 41, 42, and 43 and a drying temperature is increased sequentially in order from an upstream side toward a downstream side in the transport direction of the electrolyte membrane 2. Specifically, hot air of a relatively low temperature is blown from the most upstream drying zone 41 on the catalyst ink layer 8 immediately after being applied, thereby increasing the temperature of the catalyst ink layer 8 slightly. Next, hot air of a rather high temperature is blown from the intermediate drying zone 42 to dry the catalyst ink layer 8 gently. Then, hot air of a high temperature is blown from the most downstream drying zone 43 to dry the catalyst ink layer 8 intensively. In this way, the drying temperature is increased gradually to dry the catalyst ink layer 8 in stages, thereby preventing the occurrence of a crack during the drying process.

The drying furnace 40 includes the most upstream heat-shielding zone 44 in the transport direction of the electrolyte membrane 2 and the most downstream heat-shielding zone 45 in this transport direction. This can prevent hot air blown from the drying zones 41, 42, and 43 from passing over the drying furnace 40 and flowing into an upstream side and a downstream side of the suction roller 20. As a result, the coating nozzle 30 provided upstream of the drying furnace 40 or the attachment part 50 provided downstream of the drying furnace 40 can be prevented from being heated unnecessarily.

As the suction roller 20 rotates further thereafter, the catalyst layer 9 on the rear surface after being dried reaches the attachment part 50. The attachment part 50 performs the laminating process of laminating the support film 7 on the rear surface of the electrolyte membrane 2 (step S6). Specifically, the attachment part 50 laminates the support film 7 on a coated surface of the electrolyte membrane 2 formed by the coating process by the manufacturing apparatus 1.

Fig. 13 shows the laminating process of laminating the support film 7 on the coated surface of the electrolyte membrane 2. The band-shaped support film 7 is supplied continuously from the support film unwinding roller 55 toward the position of the attachment part 50 and its vicinity on the outer circumferential surface of the suction roller 20. The support film 7 may be a resin film having sufficient mechanism strength and an excellent function of retaining a shape such as a polyethylene naphthalate (PEN) or polyethylene terephthalate (PET) film. Specifically, the support film 7 may be the same as the backsheet 6. The backsheet 6 having been separated by the separation part 10 and wound around the backsheet winding roller 14 may be used as the support film 7 to be fed from the support film unwinding roller 55.

The support film 7 fed from the support film unwinding roller 55 is suspended on the tension sensing roller 52 and then supplied to the suction roller 20. The tension of the support film 7 in a period from when the support film 7 is fed from the support film unwinding roller 55 to when the support film 7 is used for the laminating process is sensed by the tension sensing roller 52. Rotation of the support film unwinding roller 55 is controlled in a manner such that the sensed value takes a predetermined value.

The support film 7 is supplied to a place slightly upstream of the laminate roller 51 of the attachment part 50 in the transport direction of the electrolyte membrane 2. Specifically, the support film 7 is supplied between the laminate roller 51 and the drying furnace 40. As shown in Fig. 13, the supplied support film 7 gets caught up in the rotation of the laminate roller 51 to be overlaid on the rear surface of the electrolyte membrane 2. The rear surface of the electrolyte membrane 2 is provided with the catalyst layer 9 resulting from the application from the coating nozzle 30 and the drying at the drying furnace 40. By overlaying the support film 7 on the rear surface of the electrolyte membrane 2, the catalyst layer 9 on the rear surface is caught between the electrolyte membrane 2 and the support film 7.

As the suction roller 20 and the laminate roller 51 rotate, a stack including the electrolyte membrane 2 with the catalyst layer 9 and the support film 7 overlaid on the rear surface of the electrolyte membrane 2 is caught between the suction roller 20 and the laminate roller 51. As a result, the stack including the electrolyte membrane 2 and the support film 7 overlaid on the rear surface of the electrolyte membrane 2 is pressed from the suction roller 20 and the laminate roller 51. The force of the suction roller 20 and that of the laminate roller 51 pressing the stack are determined by the interval between the outer circumferential surface of the suction roller 20 and the laminate roller 51. The interval between the suction roller 20 and the laminate roller 51 is adjusted by the cylinder supporting the laminate roller 51.

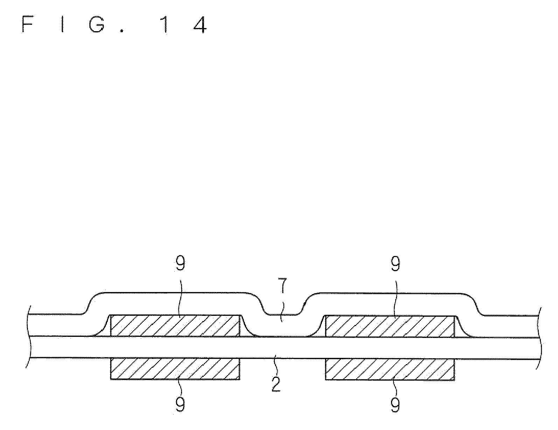

As the stack including the electrolyte membrane 2 and the support film 7 overlaid on the rear surface of the electrolyte membrane 2 is pressed from the suction roller 20 and the laminate roller 51, the laminating process of laminating the support film 7 on the rear surface of the electrolyte membrane 2 proceeds. Fig. 14 is a sectional view of the electrolyte membrane 2 on which the support film 7 is laminated. The support film 7 is laminated on the rear surface of the electrolyte membrane 2 in a region (non-coated region) where the catalyst layer 9 is not formed. Meanwhile, the support film 7 is not laminated on the catalyst layer 9.

The laminate roller 51 is controlled at the designated temperature by the heater 95. The laminate roller 51 controlled in temperature by the heater 95 heats the electrolyte membrane 2, thereby increasing the adhesive power of the electrolyte membrane 2 to reliably laminate the support film 7 on the electrolyte membrane 2. The temperature of the laminate roller 51 controlled by the heater 95 depends on the adhesive power of the electrolyte membrane 2. More specifically, as the adhesive power of the electrolyte membrane 2 itself is lower, the heater 95 controls the laminate roller 51 at a higher temperature. If the adhesive power of the electrolyte membrane 2 itself is sufficiently high so laminating the support film 7 on the electrolyte membrane 2 does not require particular heating, the support film 7 can be laminated on the electrolyte membrane 2 only by controlling the laminate roller 51 at ordinary temperatures using the heater 95. Conversely, if the adhesive power of the electrolyte membrane 2 itself is low so the support film 7 cannot be laminated on the electrolyte membrane 2 unless the laminate roller 51 is heated, the heater 95 controls the laminate roller 51 at a high temperature.

An upper limit of the temperature of the laminate roller 51 controlled by the heater 95 is the glass transition temperature Tg of the aforementioned ionomer in the catalyst layer 9. This is for the reason that controlling the laminate roller 51 at a temperature exceeding the glass transition temperature Tg of the ionomer in the catalyst layer 9 causes a risk of the catalyst layer 9 heated by the heater 95 being melted and laminated on the support film 7. Specifically, the heater 95 controls the laminate roller 51 at a temperature from ordinary temperatures to the glass transition temperature Tg of the ionomer in the catalyst layer 9.

The laminate roller 51 laminates the support film 7 on the rear surface of the electrolyte membrane 2 and separates the front surface of this electrolyte membrane 2 on which the support film 7 is laminated from the outer circumferential surface of the suction roller 20. The resultant catalyst-coated membrane 5 with the support film 7 laminated by the laminating process using the suction roller 20 and the laminate roller 51 is suspended on the tension sensing roller 53 and then wound around the coated membrane winding roller 56 (step S7). The tension of the catalyst-coated membrane 5 with the support film 7 in a period from when the support film 7 is laminated and the electrolyte membrane 2 is separated from the suction roller 20 to when the catalyst-coated membrane 5 with the support film 7 reaches the coated membrane winding roller 56 is sensed by the tension sensing roller 53. Rotation of the coated membrane winding roller 56 is controlled in a manner such that the sensed value takes a predetermined value. When the catalyst-coated membrane 5 with the support film 7 is wound around the coated membrane winding roller 56, a series of the processes of manufacturing the catalyst-coated membrane 5 is completed. The tension sensing roller 53 contacts the support film 7. Specifically, the tension sensing roller 53 does not contact the electrolyte membrane 2 directly. This can prevent deformation of the electrolyte membrane 2 to occur by contact with the tension sensing roller 53.

In the manufacturing apparatus 1, the drying furnace 40 in the processing position covers a part of the outer circumferential surface of the suction roller 20 and blows hot air on the outer circumferential surface of the suction roller 20 for drying the catalyst ink layer 8. Thus, heat is stored gradually in the suction roller 20 made of the porous ceramic to increase the temperature of the suction roller 20. If the suction roller 20 is placed at a high temperature exceeding a designated value, the catalyst ink applied from the coating nozzle 30 to the electrolyte membrane 2 is heated immediately to be dried rapidly, thereby causing a risk of the occurrence of a crack in a surface of the catalyst ink layer 8.

In this regard, the water-cooled tubes 22 are provided in the suction roller 20 (Fig. 3) and constant-temperature water is passed through the water-cooled tubes 22 to cool the suction roller 20, thereby preventing the temperature of the suction roller 20 from exceeding the designated value. Meanwhile, hot air is blown from the drying furnace 40 on the outer circumferential surface of the suction roller 20. Thus, if the heat conductivity of the suction roller 20 made of the porous ceramic is low, temperature increase of this outer circumferential surface cannot be controlled sufficiently in some cases.

Even in such cases, cooling air is blown from the surface cooling part 60 (Fig. 1) toward the outer circumferential surface of the suction roller 20. This cools the outer circumferential surface of the suction roller 20 where heat is stored as a result of blow of hot air from the drying furnace 40, so that the heat can be removed. This can prevent the catalyst ink applied to the electrolyte membrane 2 from being heated immediately after the catalyst ink is applied from the coating nozzle 30.

Described next is how the manufacturing apparatus 1 operates when transport of the electrolyte membrane 2 is stopped. Transport of the electrolyte membrane 2 is stopped if a remaining amount of the electrolyte membrane 2 wound around the electrolyte membrane unwinding roller 12 is reduced and a roll of the electrolyte membrane 2 is to be exchanged or if some trouble occurs in the manufacturing apparatus 1, for example. If the catalyst ink applied from the coating nozzle 30 to the electrolyte membrane 2 is yet to be processed, transport of the electrolyte membrane 2 may be stopped after the drying process on the catalyst ink layer 8 resulting from this application is finished.

If transport of the electrolyte membrane 2 is stopped, rotation of the suction roller 20 is stopped. Further, the operation of an entire transport mechanism including the suction roller 20, the electrolyte membrane unwinding roller 12, and the coated membrane winding roller 56 is stopped. In response to these stops, the drying furnace 40 is moved from the processing position (Fig. 4) to the standby position (Fig. 5).

The drying furnace 40 having been moved to the standby position continues operation under a processing condition same as that for the heating process on the catalyst ink layer 8 in the processing position. More specifically, hot air at the same temperature and the same flow rate as hot air ejected from each of the three drying zones 41, 42, and 43 for the heating process in the processing position is ejected from the drying furnace 40 in the standby position. The hot air ejected from each of the three drying zones 41, 42, and 43 is sucked and exhausted through the exhaust pipe 48. Exhausting the hot air through the exhaust pipe 48 when the drying furnace 40 is in the standby position is intended to place the standby position and the processing position in the same ambient environment. Specifically, when the drying furnace 40 is in the processing position, hot air ejected from the drying furnace 40 flows between the drying furnace 40 and the suction roller 20 and sucked through the heat-shielding zones 44 and 45. By contrast, when the drying furnace 40 is in the standby position where the suction roller 20 does not exist, substantially no hot air is sucked through the heat-shielding zones 44 and 45. Thus, to place the standby position in the same environment as the processing position, hot air is sucked through the exhaust pipe 48. As a result, the temperature of the drying furnace 40 in the standby position can be controlled under a condition same as that for temperature control in the processing position. While the drying furnace 40 is being moved from the processing position to the standby position and after the drying furnace 40 is moved to the standby position, the drying furnace 40 continues operation under a processing condition same as that for operation in the processing position.

The drying furnace 40 is moved from the processing position to the standby position while rotation of the suction roller 20 is stopped. Thus, while ejection of hot air from the drying furnace 40 continues, the hot air is not blown on the suction roller 20 and the electrolyte membrane 2. This prevents heating of only a part of the suction roller 20 and only a part of the electrolyte membrane 2 to a high temperature due to blow of the hot air only on these parts, thereby maintaining uniformity of the temperature distribution of the suction roller 20. Specifically, when transport of the electrolyte membrane 2 is stopped, the drying furnace 40 is moved from the processing position to the standby position and continues operation under a processing condition same as that for operation in the processing position. This makes it possible to continue temperature control of the drying furnace 40 without causing nonuniformity of the temperature distribution of the suction roller 20.

If transport of the electrolyte membrane 2 is to be restarted, the drying furnace 40 is moved from the standby position to the processing position. During this movement, the drying furnace 40 certainly continues operation of ejecting hot air. In response to the movement of the drying furnace 40, the transport mechanism including the suction roller 20 restarts operation to start rotation of the suction roller 20. If the transport mechanism does not require a long time to reach a steady speed for transport, the operation of the transport mechanism may be restarted after the drying furnace 40 is moved to the processing position. Conversely, if the transport mechanism requires a long time to reach the steady speed for transport, the drying furnace 40 may be started to be moved to the processing position after the operation of the transport mechanism is restarted. After the movement of the drying furnace 40 to the processing position is completed and the transport mechanism reaches the steady speed for transport, application of the catalyst ink from the coating nozzle 30 is started to restart manufacture of the catalyst-coated membrane 5.

The drying furnace 40 in the standby position continues operation under a processing condition same as that for operation in the processing position. Thus, the drying furnace 40 can perform the drying process immediately after returning to the processing position to restart manufacture of the catalyst-coated membrane 5 readily. This can minimize the amount of the electrolyte membrane 2 to be wasted to no purpose by rotation of the suction roller 20 in a period from when transport of the electrolyte membrane 2 is restarted to when application of the catalyst ink is started.

In this preferred embodiment, if transport of the electrolyte membrane 2 is stopped for some reason, the drying furnace 40 is moved from the processing position to the standby position and continues operation under a processing condition same as that for the heating process on the catalyst ink layer 8 in the processing position. Thus, temperature control of the drying furnace 40 can be continued without causing nonuniformity of the temperature distribution of the suction roller 20. This can shorten time required to restart the process on the electrolyte membrane 2.

Regardless of whether the drying furnace 40 is in the processing position or the standby position, atmosphere in the standby position and atmosphere in the processing position are separated by the sealing plates 84 and 85 and the shielding plates 81, 82, and 83. As a result, while the suction roller 20 is stopped, hot air ejected from the drying furnace 40 in the standby position is prevented from reaching the suction roller 20 being stopped and heating a part of the suction roller 20.

During maintenance, transport of the electrolyte membrane 2 is stopped and the drying furnace 40 has been moved to the standby position isolated from the suction roller 20. Thus, the suction roller 20 and its surrounding are opened to facilitate cleaning of the suction roller 20.

While the preferred embodiment of the present invention has been described hereinabove, the present invention is not limited to the aforementioned embodiment but can be changed in various ways without departing from the substance of the invention. For example, in the aforementioned preferred embodiment, a hot-air drying furnace of ejecting hot air is used as the drying furnace 40. Alternatively, the drying furnace 40 may be an infrared heater or a plate heater, for example. Even by the use of the infrared heater, etc. as the drying furnace 40, when transport of the electrolyte membrane 2 is stopped, advantageous effect comparable to that of the aforementioned preferred embodiment can still be achieved by moving the drying furnace 40 from the processing position to the standby position and then making the drying furnace 40 continue operation under a processing condition same as that for the heating process on the catalyst ink layer 8 in the processing position.

If transport of the electrolyte membrane 2 is stopped for a long time (24 hours or more, for example), ejection of hot air from the drying furnace 40 may be stopped. Even if the operation of the drying furnace 40 is stopped, by starting temperature control of the drying furnace 40 in the standby position coincidentally with restart of manufacture of the catalyst-coated membrane 5, nonuniformity of the temperature distribution of the suction roller 20 can still be prevented in a period of this temperature control.

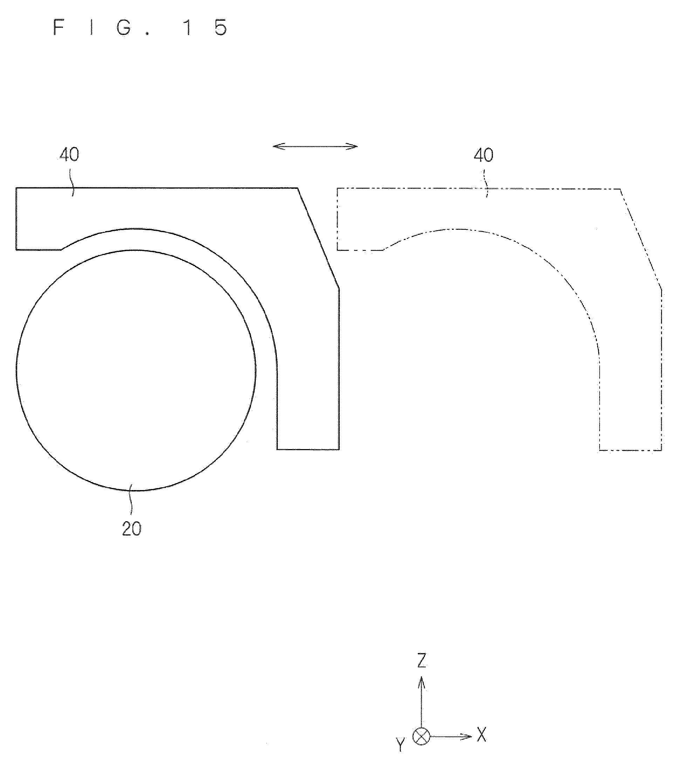

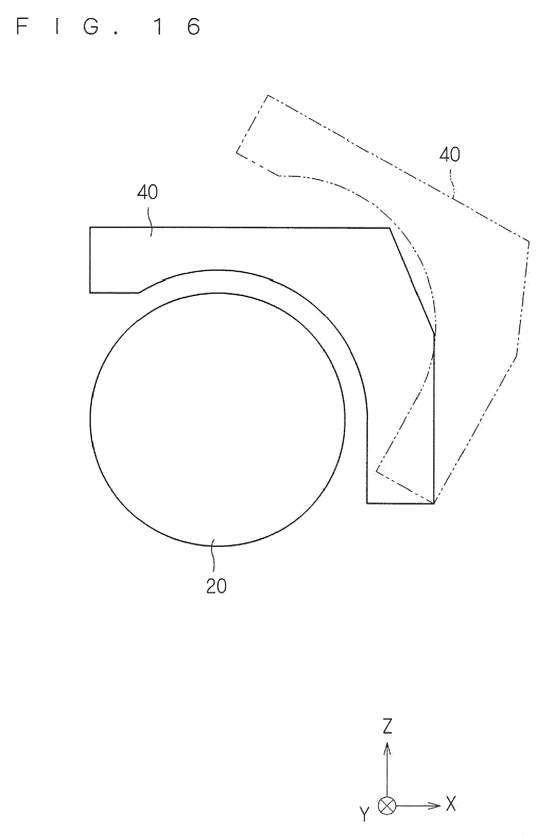

In the aforementioned preferred embodiment, the processing position and the standby position are juxtaposed in the axis direction of the suction roller 20 (Y-axis direction). A relationship between the processing position and the standby position may be one shown in each of Figs. 15 and 16. Referring to Figs. 15 and 16, positions indicated by solid lines show the processing position where the drying furnace 40 covers a part of the outer circumferential surface of the suction roller 20 and positions indicated by chain double-dashed lines show the standby position where the drying furnace 40 is isolated from the suction roller 20.

In the illustration of Fig. 15, the drying furnace 40 is moved between the processing position and the standby position in a horizontal direction perpendicular to the axis direction of the suction roller 20 (specifically, in the X-axis direction). In the illustration of Fig. 16, the drying furnace 40 is moved in a pivotal manner around an axis parallel to the axis direction of the suction roller 20. Even with the relationships illustrated in Figs. 15 and 16, when transport of the electrolyte membrane 2 is stopped, advantageous effect comparable to that of the aforementioned preferred embodiment can still be achieved by moving the drying furnace 40 from the processing position to the standby position and then making the drying furnace 40 continue operation under a processing condition same as that for the heating process on the catalyst ink layer 8 in the processing position.

The processing position of the drying furnace 40 may also be a position where the drying furnace 40 dries a coating liquid on a base material surrounded by two transport rollers.

In the aforementioned preferred embodiment, the drying furnace 40 includes the three drying zones 41, 42 and 43. However, the number of drying zones formed by dividing the drying furnace 40 is not limited to three but it may be two or four or more. With any number of the drying zones, the temperature of hot air blown from the drying furnace 40 is increased sequentially in order from an upstream side toward a downstream side in the direction where the electrolyte membrane 2 is transported by the suction roller 20.

A target of the drying process by the drying apparatus of the present invention is not limited to the catalyst ink applied to the electrolyte membrane 2 but it may also be any coating liquid applied to a base material.

The present invention is applied preferably to manufacture of a catalyst-coated membrane of a polymer electrolyte fuel cell including applying catalyst ink to a polymer electrolyte membrane that is deformed easily by its swelling and shrinkage, drying the catalyst ink, and forming a catalyst layer on this electrolyte membrane.

While the invention has been described in detail, the foregoing description is in all aspects illustrative and not restrictive. It is therefore understood that numerous modifications and variations can be devised without departing from the scope of the invention.

## Claims

1. A drying apparatus to dry a coating liquid applied to a band-shaped base material by heating said coating liquid, the drying apparatus comprising:
a suction roller having an outer circumferential surface on which said base material is supported under suction, said base material being coated with said coating liquid applied to one surface of said base material;
a heating part that dries said coating liquid by heating said coating liquid, said coating liquid being applied to said one surface of said base material supported under suction and transported by said suction roller; and
a driving part that moves said heating part between a processing position where said heating part covers a part of said outer circumferential surface of said suction roller and a standby position where said heating part is isolated from said suction roller,
wherein after said heating part is moved to said standby position, said heating part continues operation under a processing condition same as that for heating process in said processing position.

2. The drying apparatus according to claim 1, wherein said heating part is a hot-air drying furnace that ejects hot air,
said drying apparatus comprising an exhaust part provided in said standby position, said exhaust part being used for exhaust of hot air ejected from said hot-air drying furnace.

3. The drying apparatus according to claim 2, further comprising a shielding mechanism that separates atmosphere in said standby position and atmosphere in said processing position.

4. The drying apparatus according to any one of claims 1 to 3, wherein
said base material is an electrolyte membrane of a fuel cell, and
said coating liquid is catalyst ink containing catalyst particles of platinum or a platinum alloy.

5. A drying method to dry a coating liquid applied to a band-shaped base material by heating said coating liquid, the drying method comprising the steps of:
(a) supporting said band-shaped base material under suction on an outer circumferential surface of a suction roller;
(b) applying said coating liquid to one surface of said base material supported under suction and transported by said suction roller; and
(c) drying said coating liquid applied to said one surface of said base material by heating said coating liquid using a heating part, wherein
said heating part is moved between a processing position where said heating part covers a part of said outer circumferential surface of said suction roller and a standby position where said heating part is isolated from said suction roller, and
after said heating part is moved to said standby position, said heating part continues operation under a processing condition same as that for heating process in said processing position.

6. The drying method according to claim 5, wherein
said base material is an electrolyte membrane of a fuel cell, and
said coating liquid is catalyst ink containing catalyst particles of platinum or a platinum alloy.
